# EUROPEAN PATENT APPLICATION

(11) **EP 3 910 566 A1**
(43) Date of publication of application: **17.11.2021**
(21) Application number: 21173852.1
(22) Date of filing: 14.05.2021
(51) Int. Cl.: G06Q 10/00, G06Q 10/08

(54) **METHOD AND APPARATUS FOR DELIVERY VERIFICATION**

(30) Priority: 15.05.2020 US 202063025574 P; 09.12.2020 US 202017116516
(71) Applicant: HERE Global B.V., 5611 ZT Eindhoven (NL)
(72) Inventor: WIROLA, Lauri Aarne Johannes, 33100 Tampere (FI); SYRJÄRINNE, Jari, 33100 Tampere (FI); DI PAOLA, Erminio, 10115 Berlin (DE)
(74) Representative: Cohausz & Florack

(57) **Abstract**

A method, apparatus and computer program product are provided for delivery verification. In the context of a method, an estimated time of delivery to a respective delivery location is determined. The estimated time of delivery is at least partially based upon a first location along a delivery route and the respective delivery location. The method also includes determining a delivery time at which a delivery attempt or a delivery was indicated to be made to the respective delivery location and performing a comparison of the delivery time to the estimated time of delivery. The method further includes differently verifying the delivery attempt or the delivery to the respective delivery location depending upon the comparison of the delivery time to the estimated time of delivery.

## Description

### TECHNOLOGIAL FIELD

### CROSS REFERENCE TO RELATED APPLICATION

This application claims benefit of U.S. Provisional Application No. 63/025,574, filed May 15, 2020, which is incorporated herein by reference in its entirety.

An example embodiment relates generally to delivery verification and, more particularly, to a method, apparatus and computer program product for providing for different processes for verifying a delivery or a delivery attempt depending upon a relationship of the delivery time to an estimated time of delivery.

### BACKGROUND

The use of delivery services is expanding with more and different types of items being delivered by an increasing number of delivery companies. These deliveries are made to a wide variety of places of business, residences, such as homes, apartments, condominiums or like, as well as a number of other locations. As a result of the prevalence and increasing usage of delivery services, the efficiency with which the delivery services are performed is also of increasing importance. While navigation systems can provide for navigational assistance including the identification and mapping of the most efficient routes to be taken between two addresses along a delivery route, deliveries are generally made to the door of the recipient and, as result, traditional navigational systems may not provide navigational assistance for this final phase of the delivery route, such as from the delivery vehicle to the door of the recipient.

While this final phase of the delivery may sometimes be straightforward, such as in an instance in which a delivery person parks the vehicle on a street in front of a house and then carries the item to the front door of the house which is visible from the street on which the delivery person parked, this final phase of the delivery is less obvious and potentially more complicated in a number of other situations. For example, deliveries made to large apartment or condominium buildings, to multi-tenant office buildings or to apartment or business complexes may present challenges with respect to the route taken by a delivery person from the location at which the delivery vehicle is parked to the door of the recipient. In these instances, the path to be taken by the delivery person may not be readily apparent and the location at which the delivery vehicle should be parked in order to most efficiently enter the building to which the delivery is to be made may also not be apparent. Because of the size and/or complexity of some buildings or complexes that include the location to which a delivery is to be made, the final phase of the delivery route may be complicated by the presence of many different routes that may be taken by the delivery person from the location at which the delivery vehicle is parked to the location to which the delivery is to be made with little, if any, basis to differentiate between the different routes. The different routes that may be taken by the delivery person may include one or more routes that are more time consuming and therefore less efficient than other potential routes, although a delivery person who is unfamiliar with the building or complex may not know in advance as to which of the routes is most efficient. As such, the efficiency with which a delivery person makes a delivery may be diminished by taking a less efficient route from the location at which the delivery vehicle is parked to the door at which the delivery is to be made with this diminution in efficiency potentially being magnified by the typically large number of deliveries that each delivery person makes during a day.

In at least some situations, a delivery company instructs its delivery people to verify the deliveries or the delivery attempts. A delivery company may require verification of deliveries or delivery attempts for various reasons. For example, verification may serve to evidence to the delivery company that the delivery person actually made the delivery or the delivery attempt and therefore avoids issues associated with delivery persons who errantly indicate that a delivery attempt has been made when, in fact, the delivery person has not actually visited the delivery location. In this regard, some delivery people may be paid on the basis of a delivery attempt and the verification of the delivery or the delivery attempt serves to avoid instances in which the delivery person might otherwise misrepresent a delivery attempt in an effort to be compensated for the delivery attempt without actually expending the time or making the effort to perform the delivery attempt.

A delivery or a delivery attempt may be verified in various manners. However, these verification techniques all suffer from one or more deficiencies including the expenditure of increased time in the delivery process to verify the deliveries or the delivery attempts and/or an increased number of steps to be taken by a delivery person to verify the delivery or the delivery attempt. By way of example, one technique that is utilized to verify a delivery or a delivery attempt is the use of photographs. For example, the delivery of an item delivered to a location may be verified by a photograph taken by the delivery person of the item sitting on the doorstep at the location. Similarly, in an instance in which the item is only delivered in an instance in which the recipient is available to receive the item, such as in an instance in which the recipient must sign for the item, a delivery attempt to a location may be verified even in an instance in which the recipient is unavailable and the item is not left at the location by capturing a photograph of the location to which the delivery attempt was made. These photographs may be saved by the delivery company as evidence of the delivery or delivery attempt and may be shared with the recipient of the delivery or the intended recipient of a delivery attempt to alert the recipient of the delivery or the intended recipient of the attempted delivery.

Like other verification techniques, the collection of the photographic evidence is helpful for verification, but adds an additional step to the delivery process and, as a result, may further decrease the overall efficiency of the delivery process, particularly when this additional step must be repeated for each of the potentially large number of delivery locations that a delivery person visits in a day. Further, the storage of the photographs and the transmission of the photographs from the delivery person to the delivery company and, in some instances, to the recipient of the delivery or the delivery attempt, consumes memory to store the photographs and other network resources to support the transmission of the photographs.

### BRIEF SUMMARY

A method, apparatus and computer program product are provided in accordance with an example embodiment in order to provide for delivery verification, such as the verification of the delivery of an item or the verification of a delivery attempt, such as in an instance in which the recipient was unavailable and, as a result, the item was not left at the delivery location. In this regard, the method, apparatus and computer program product of an example embodiment provide for delivery verification in an efficient manner in order to increase the overall efficiency with which deliveries are made and information that serves to verify those deliveries is collected. In an example embodiment, the method, apparatus and computer program product provide for different techniques to verify a delivery or a delivery attempt.

In this regard, the verification of a delivery or delivery attempt may be provided in accordance with an example embodiment based upon a comparison of the delivery time at which the delivery or the delivery attempt was indicated to be made and an estimated time of delivery with delivery verification being provided in those instances in which the delivery time appropriately corresponds to the estimated time of delivery without additional photographic or other evidence, thereby increasing the efficiency with which delivery verification is provided. However, the different verification techniques provided by the method, apparatus and computer program product of an example embodiment permit a delivery or delivery attempt to be verified in other instances, such as in instances in which the delivery time does not appropriately correspond with the estimated time of delivery, by providing for the collection of additional evidence for delivery verification purposes. While the collection of the additional evidence may be less efficient, the method, apparatus and computer program product of an example embodiment may limit the collection of the additional evidence to only a subset of the deliveries or delivery attempts so as to correspondingly limit the diminution in efficiency potentially brought about by the collection of the additional evidence.

In an example embodiment, an apparatus is provided that is configured to provide delivery verification. The apparatus includes at least one processor and at least one memory storing computer program code with the at least one memory and the computer program code configured to, with the processor, cause the apparatus to at least determine an estimated time of delivery to a respective delivery location. The estimated time of delivery is at least partially based upon a first location along a delivery route and the respective delivery location. The apparatus is also caused to determine a delivery time at which a delivery attempt or a delivery was indicated to be made to the respective delivery location and to perform a comparison of the delivery time to the estimated time of delivery. The apparatus is further caused to differently verify the delivery attempt or the delivery to the respective delivery location depending upon the comparison of the delivery time to the estimated time of delivery.

The at least one memory and the computer program code are configured to, with the processor, cause the apparatus of an example embodiment to differently verify the delivery attempt or the delivery by verifying the delivery to the respective delivery location in an instance in which the delivery time is within a predefined window of time about the estimated time of delivery. In another example embodiment, the at least one memory and the computer program code are configured to, with the processor, cause the apparatus to differently verify the delivery attempt or the delivery by requiring additional evidence beyond the delivery time to verify the delivery attempt or the delivery to the respective delivery location in an instance in which the delivery time is outside of the predefined window of time about the estimated time of delivery. For example, the at least one memory and the computer program code may be configured to, with the processor, cause the apparatus of this embodiment to require additional evidence by causing a prompt to be provided requesting that a photograph of at least a portion of the respective delivery location be captured. The at least one memory and the computer program code are configured to, with the processor, cause the apparatus of another example embodiment to differently verify the delivery attempt or the delivery by identifying the delivery attempt or the delivery to the respective delivery location to be unverifiable in an instance in which the delivery time is outside of the predefined window of time about the estimated time of delivery.

In an example embodiment in which the first location along the delivery route comprises a location at which a delivery vehicle is parked in preparation for making the delivery attempt or the delivery to the respective delivery location, the at least one memory and the computer program code are configured to, with the processor, cause the apparatus to determine the estimated time of delivery by determining the estimated time of delivery at least partially based upon the location at which the delivery vehicle is parked and the respective delivery location. The at least one memory and the computer program code are configured to, with the processor, cause the apparatus of an example embodiment to determine the estimated time of delivery by determining the estimated time of delivery based upon reference to an estimated time of arrival (ETA) database that provides information regarding an elapsed time to travel between locations associated with the first location and the respective delivery location. In another example embodiment, the at least one memory and the computer program code are configured to, with the processor, cause the apparatus to determine the estimated time of delivery by determining the estimated time of delivery based upon reference to a reverse geocoding database that provides information regarding a latitude, longitude and altitude of a location associated with the first location and the respective delivery location.

In another example embodiment, a method for delivery verification is provided. The method includes determining an estimated time of delivery to a respective delivery location. The estimated time of delivery is at least partially based upon a first location along a delivery route and the respective delivery location. The method also includes determining a delivery time at which a delivery attempt or a delivery was indicated to be made to the respective delivery location and performing a comparison of the delivery time to the estimated time of delivery. The method further includes differently verifying the delivery attempt or the delivery to the respective delivery location depending upon the comparison of the delivery time to the estimated time of delivery.

The method of an example embodiment differently verifies the delivery attempt or the delivery by verifying the delivery attempt or the delivery to the respective delivery location in an instance in which the delivery time is within a predefined window of time about the estimated time of delivery. In another example embodiment, the method differently verifies the delivery attempt or the delivery by requiring additional evidence beyond the delivery time to verify the delivery attempt or the delivery to the respective delivery location in an instance in which the delivery time is outside of the predefined window of time about the estimated time of delivery. For example, the method of this embodiment may require additional evidence by causing a prompt to be provided requesting that a photograph of at least a portion of the respective delivery location be captured. In yet another embodiment, the method differently verifies the delivery attempt or the delivery by identifying the delivery attempt or the delivery to the respective delivery location to be unverifiable in an instance in which the delivery time is outside of the predefined window of time about the estimated time of delivery.

In an embodiment in which the first location along the delivery route comprises a location at which a delivery vehicle is parked in preparation for making the delivery attempt or the delivery to the respective delivery location, the method may determine the estimated time of delivery by determining the estimated time of delivery at least partially based upon the location at which the delivery vehicle is parked and the respective delivery location. In an example embodiment, the method determines the estimated time of delivery by determining the estimated time of delivery based upon reference to an estimated time of arrival (ETA) database that provides information regarding an elapsed time to travel between locations associated with the first location and the respective delivery location. In another example embodiment, the method determines the estimated time of delivery by determining the estimated time of delivery based upon reference to a reverse geocoding database that provides information regarding a latitude, longitude and altitude of a location associated with the first location and the respective delivery location.

In a further example embodiment, a computer program product is provided that includes at least one non-transitory computer-readable storage medium having computer-executable program code instructions stored therein with the computer-executable program code instructions comprising program code instructions configured to, when executed by a processor of an apparatus, cause the apparatus to determine an estimated time of delivery to a respective delivery location. The estimated time of delivery is at least partially based upon a first location along a delivery route and the respective delivery location. The computer-executable program code instructions also include program code instructions configured to determine a delivery time at which a delivery attempt or a delivery was indicated to be made to the respective delivery location and program code instructions configured to perform a comparison of the delivery time to the estimated time of delivery. The computer-executable program code instructions further include program code instructions configured to differently verify the delivery attempt or the delivery to the respective delivery location depending upon the comparison of the delivery time to the estimated time of delivery.

In an example embodiment, the program code instructions configured to differently verify the delivery attempt or the delivery include program code instructions configured to verify the delivery attempt or the delivery to the respective delivery location in an instance in which the delivery time is within a predefined window of time about the estimated time of delivery. In another example embodiment, the program code instructions configured to differently verify the delivery attempt or the delivery include program code instructions configured to require additional evidence beyond the delivery time to verify the delivery attempt or the delivery to the respective delivery location in an instance in which the delivery time is outside of the predefined window of time about the estimated time of delivery. In a further example embodiment, the program code instructions configured to differently verify the delivery attempt or the delivery include program code instructions configured to identify the delivery attempt or the delivery to the respective delivery location to be unverifiable in an instance in which the delivery time is outside of the predefined window of time about the estimated time of delivery.

In yet another example embodiment, an apparatus configured to provide delivery verification is provided. The apparatus includes means for determining an estimated time of delivery to a respective delivery location. The estimated time of delivery is at least partially based upon a first location along a delivery route and the respective delivery location. The apparatus also includes means for determining a delivery time at which a delivery attempt or a delivery was indicated to be made to the respective delivery location and means for performing a comparison of the delivery time to the estimated time of delivery. The apparatus further includes means for differently verifying the delivery attempt or the delivery to the respective delivery location depending upon the comparison of the delivery time to the estimated time of delivery.

The means for differently verifying the delivery attempt or the delivery in accordance with an example embodiment includes means for verifying the delivery attempt or the delivery to the respective delivery location in an instance in which the delivery time is within a predefined window of time about the estimated time of delivery. In another example embodiment, the means for differently verifying the delivery attempt or the delivery includes means for requiring additional evidence beyond the delivery time to verify the delivery attempt or the delivery to the respective delivery location in an instance in which the delivery time is outside of the predefined window of time about the estimated time of delivery. For example, the means for requiring additional evidence may include means for causing a prompt to be provided requesting that a photograph of at least a portion of the respective delivery location be captured. In yet another embodiment, the means for differently verifying the delivery attempt or the delivery includes means for identifying the delivery attempt or the delivery to the respective delivery location to be unverifiable in an instance in which the delivery time is outside of the predefined window of time about the estimated time of delivery.

In an embodiment in which the first location along the delivery route comprises a location at which a delivery vehicle is parked in preparation for making the delivery attempt or the delivery to the respective delivery location, the means for determining the estimated time of delivery includes means for determining the estimated time of delivery at least partially based upon the location at which the delivery vehicle is parked and the respective delivery location. In an example embodiment, the means for determining the estimated time of delivery includes means for determining the estimated time of delivery based upon reference to an estimated time of arrival (ETA) database that provides information regarding an elapsed time to travel between locations associated with the first location and the respective delivery location. In another example embodiment, the means for determining the estimated time of delivery includes means for determining the estimated time of delivery based upon reference to a reverse geocoding database that provides information regarding a latitude, longitude and altitude of a location associated with the first location and the respective delivery location.

### BRIEF DESCRIPTION OF THE DRAWINGS

Having thus described certain embodiments of the invention in general terms, reference will now be made to the accompanying drawings, which are not necessarily drawn to scale, and wherein:
Figure 1 is a schematic representation of a delivery route having a plurality of delivery locations located along the route;
Figure 2 is a perspective view of a multi-story building that includes a plurality of potential delivery locations and that provides a plurality of different routes that may be taken to reach a respective delivery location;
Figure 3 is a black diagram of an apparatus that may be specifically configured in accordance with an example embodiment;
Figure 4 is a flow chart illustrating operations performed, such as by the apparatus of Figure 3, in order to verify a delivery or a delivery attempt in accordance with an example embodiment;
Figure 5 is a schematic representation of interactions between an apparatus that is configured in accordance with an example embodiment, such as the apparatus of Figure 3, and a plurality of delivery devices carried, for example, by respective delivery people;
Figure 6 is a block diagram of a system including a database, such as a map database, in communication with an apparatus configured in accordance with an example embodiment; and
Figure 7 is a flow chart illustrating operations performed, such as by the apparatus of Figure 3, in order to differently verify the delivery or the delivery attempt based upon the time at which the delivery or the delivery attempt was indicated to be made in accordance with an example embodiment.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

A method, apparatus and computer program product are provided in accordance with an example embodiment in order to provide for delivery verification. In this regard, the delivery verification may serve to verify that a delivery or a delivery attempt was made to a delivery location. In other situations, however, the delivery verification may identify that a delivery or a delivery attempt to a delivery location is unverifiable. While a delivery results in the item(s) that is being delivered being left at the delivery location, a delivery attempt represents an effort by a delivery person to deliver an item to the delivery location but does not result in the item being left at the delivery location. For example, the delivery instructions associated with the delivery of the item to the delivery location may require the recipient to be at the delivery location and to physically receive the item and/or to sign for the receipt of the item. In instances in which the recipient is not available to receive and/or sign for the item, but the delivery person has arrived at the delivery location in an effort to deliver the item, a delivery attempt, but not a delivery, has been made.

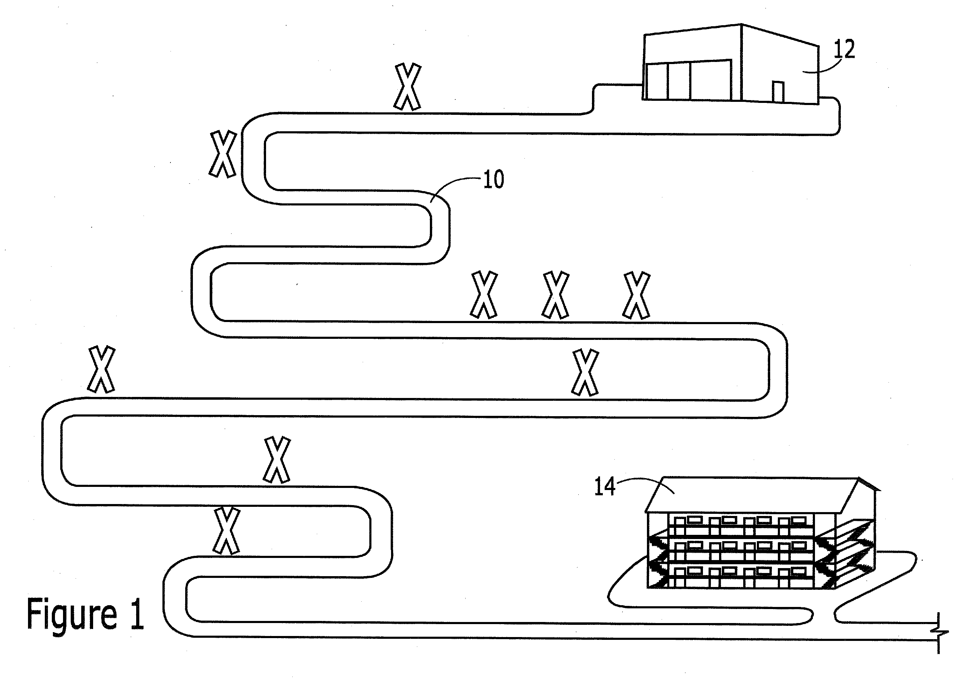

Referring now to Figure 1, a schematic representation of a delivery route 10 that a delivery person may follow in order to deliver items at a plurality of different delivery locations is depicted. In this example, a delivery route 10 commences at an origin 12 which, in the illustrated embodiment, is a warehouse, a distribution center or other facility at which the items to be delivered by the delivery person are obtained. In addition to the items to be delivered, the delivery person is also typically provided information regarding the delivery locations to which the respective items are to be delivered. In some embodiments, the delivery person also receives information, such as a map and/or navigational instructions, defining the delivery route that will take the delivery person sequentially to each of the delivery locations, each of which is identified by an X in the example of Figure 1. In other instances, the delivery person may construct the delivery route, such as with the assistance of a navigation system, a mapping system or the like, to sequentially visit each of the delivery locations. While the delivery route of this example embodiment includes a plurality of delivery locations, other delivery routes may include only a single delivery location or any different number of delivery locations.

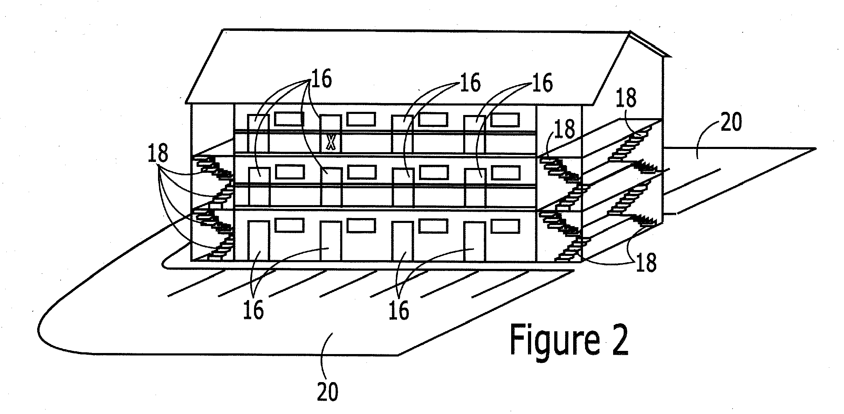

A delivery route 10 may include a variety of different types of delivery locations including houses, small businesses, stores, etc. One of the delivery locations depicted in the example of Figure 1 is a building 14, however, that includes a plurality of different potential delivery locations 16 as shown in more detail in Figure 2 with an item to be delivered to a respective one of the potential delivery locations, that is, the delivery location marked by an X. A wide variety of different types of buildings may include a plurality of potential delivery locations, such as depicted by building 14 in Figure 1. For example, buildings that include a plurality of potential delivery locations include apartment buildings, condominium buildings, multi-tenant office buildings and a variety of different building complexes, such as business complexes, apartment complexes or the like.

Although a wide variety of buildings and building complexes may include a plurality of potential delivery locations 16, the building 14 depicted in Figure 1 and, in more detail, in Figure 2 is a multi-story apartment building. Each story of the apartment building includes a plurality of apartments, each of which serves as a potential delivery location. Like many buildings or building complexes having a plurality of potential delivery locations, the building depicted in Figure 2 includes a plurality of different routes that can be taken to reach any of the potential delivery locations. In this regard, the building may be associated with a plurality of different parking lots 20, such as parking lots of different sides of the building as depicted in Figure 2, or a single large parking lot that wraps around different sides of the building. Thus, a delivery person could potentially park the delivery vehicle in a variety of different locations relative to the building, some of which provide more efficient access to the delivery location then other locations.

As with buildings or building complexes that include a plurality of potential delivery locations 16 on different floors, the apartment building 14 of Figure 2 also includes a plurality of different stairwells 18, such as one set of stairs at each corner of the building. Additionally or alternatively, a multi-story building may include elevators and/or escalators in addition to one or more stairwell(s) in order to facilitate movement between floors of the building. Depending upon the location at which the delivery vehicle was parked and the delivery location itself, the delivery person may be able to more efficiently access the delivery location via a respective one of the stairwells, elevators or escalators than the other options, such as the other stairwells. Further, a building or building complex that includes a plurality of potential delivery locations may also include a number of hallways, walkways or other pedestrian paths that may be travelled by the delivery person in order to deliver an item to a delivery location. Depending upon the location at which the delivery vehicle is parked and the delivery location itself, a delivery person may more efficiently reach the delivery location via certain ones of the hallways, walkways or pedestrian paths than the other hallways, walkways or pedestrian paths.

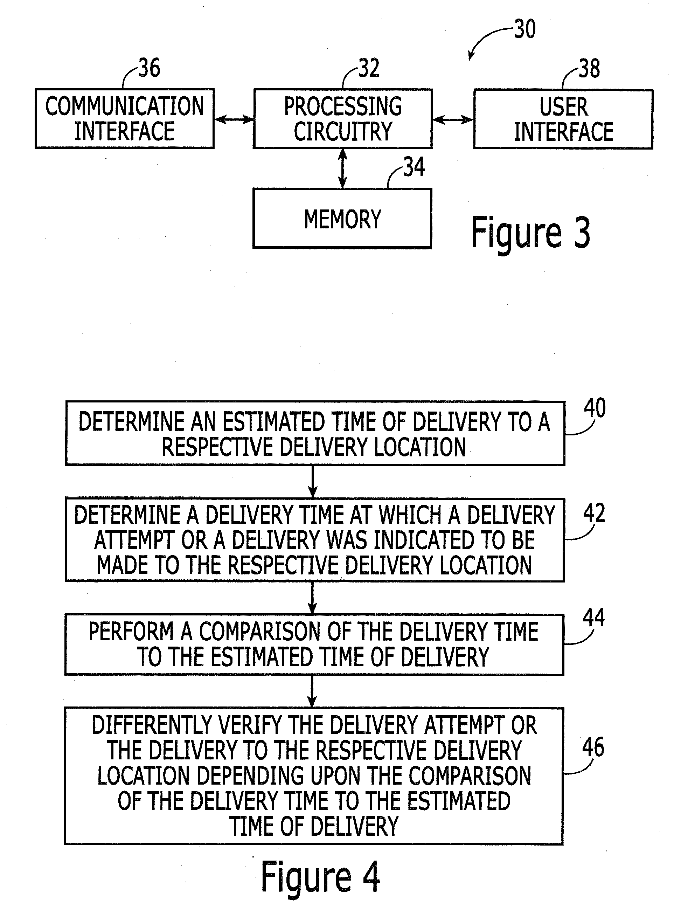

In an example embodiment, an apparatus 30 is provided as shown in Figure 3 in order to provide for delivery verification, such as verification of a delivery or verification of a delivery attempt at a delivery location. The delivery location may be any of the wide variety of delivery locations that may be included on a delivery route 10 including houses, offices, stores, schools or other buildings that provide a single delivery location as well as buildings, such as building 14 of Figure 2, that include a plurality of potential delivery locations, such as apartment or condominium buildings, multi-tenant office buildings or the like. The apparatus 30 of this example embodiment may be embodied by any of a wide variety of computing devices including, for example, a server, a distributed network of computing devices, a delivery tracking system, a computer workstation, a personal computer or any other type of computing device. Regardless of the type of computing device that embodies the apparatus 30, the apparatus of an example embodiment includes, is associated with or is otherwise in communication with processing circuitry 32, memory 34, a communication interface 36 and optionally a user interface 38, as shown in Figure 3.

In some embodiments, the processing circuitry 32 (and/or co-processors or any other processors assisting or otherwise associated with the processing circuitry) may be in communication with the memory 34 via a bus for passing information among components of the apparatus 30 of Figure 3. The memory may be non-transitory and may include, for example, one or more volatile and/or non-volatile memories. In other words, for example, the memory may be an electronic storage device (for example, a computer readable storage medium) comprising gates configured to store data (for example, bits) that may be retrievable by a machine (for example, a computing device like the processor). The memory may be configured to store information, data, content, applications, instructions, or the like for enabling the apparatus 30 to carry out various functions in accordance with an example embodiment. For example, the memory could be configured to buffer input data for processing by the processor. Additionally or alternatively, the memory could be configured to store instructions for execution by the processing circuitry.

The processing circuitry 32 may be embodied in a number of different ways. For example, the processing circuitry may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processor may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 32 may be configured to execute instructions stored in the memory 34 or otherwise accessible to the processing circuitry. Alternatively or additionally, the processing circuitry may be configured to execute hard coded functionality. As such, whether configured by hardware or software methods, or by a combination thereof, the processing circuitry may represent an entity (for example, physically embodied in circuitry) capable of performing operations according to an embodiment of the present invention while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of software instructions, the instructions may specifically configure the processing circuitry to perform the algorithms and/or operations described herein when the instructions are executed. However, in some cases, the processing circuitry may be a processor of a specific device (for example, a computing device) configured to employ an embodiment by further configuration of the processor by instructions for performing the algorithms and/or operations described herein. The processing circuitry may include, among other things, a clock, an arithmetic logic unit (ALU) and logic gates configured to support operation of the processing circuitry.

As shown in Figure 3, the apparatus 30 of an example embodiment may also optionally include a communication interface 36 that may be any means such as a device or circuitry embodied in either hardware or a combination of hardware and software that is configured to receive and/or transmit data from/to other electronic devices in communication with the apparatus, such as another memory device or a database as described below in conjunction with some example embodiments. Additionally or alternatively, the communication interface may be configured to communicate in accordance with various wireless protocols including Global System for Mobile Communications (GSM), such as but not limited to Long Term Evolution (LTE). In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s).

The apparatus 30 may also optionally include or otherwise be in communication with a user interface 38. The user interface may include a touch screen display, a keyboard, a mouse, a joystick or other input/output mechanisms. In some embodiments, the user interface, such as a display, speakers, or the like, may also be configured to provide output to the user. In this example embodiment, the processing circuitry 32 may comprise user interface circuitry configured to control at least some functions of one or more input/output mechanisms. The processing circuitry and/or user interface circuitry may be configured to control one or more functions of one or more input/output mechanisms through computer program instructions (for example, software and/or firmware) stored on a memory accessible to the processing circuitry (for example, memory 34, and/or the like).

Referring now to Figure 4, the operations performed, such as by the apparatus 30, in accordance with an example embodiment in order to provide delivery verification, such as to verify delivery or a delivery attempt, are depicted. As shown in block 40 of Figure 4, the apparatus of an example embodiment include means, such as the processing circuitry 32 or the like, for determining an estimated time of delivery to a respective delivery location. As used herein, the estimated time of delivery includes both the estimated time of delivery of an item and the estimated time of a delivery attempt. Similarly, as used herein, the delivery location includes both the respective location to which a delivery of an item is made and the respective location at which a delivery attempt is made.

The estimated time of delivery is at least partially based upon a first location along the delivery route 10 and the respective delivery location. The first location along the delivery route may be defined in various manners. For example, the first location may be the location at which the delivery person picked up the items to be delivered, such as the origin 12, e.g., a warehouse, a distribution center or other facility, or the first location may be the location at which another delivery or delivery attempt was made along the route, such as the location of the immediately preceding delivery or delivery attempt with respect to the respective delivery location. In one example embodiment, however, the first location along the delivery route is the location at which the delivery vehicle is parked in preparation for making the delivery attempt or the delivery to the respective delivery location. The location at which the delivery vehicle is parked in preparation for making the delivery attempt or the delivery to the respective delivery location is that location from which the delivery person exits the delivery vehicle in order to walk to the delivery location, such as the door to which an item is to be delivered.

In this example embodiment, the apparatus 30, such as the processing circuitry 32, is configured to determine the estimated time of delivery at least partially based upon the location at which the delivery vehicle is parked and the respective delivery location. As a result of the dependence of the estimated time of delivery upon the first location along the delivery route 10, such as the location at which a delivery vehicle is parked in preparation for making a delivery attempt or the delivery to the respective delivery location, the estimated time of delivery may be more specific than the typically broad ranges of time during which deliveries may be scheduled to occur as these generally broad ranges of time are typically provided prior to commencing the delivery activities and typically define a large range, such as the morning, the afternoon, a three hour block of time or the like, during which the delivery is anticipated to occur. In contrast, the estimated time of delivery as determined in accordance with an example embodiment is a more specific time as a result of the determination of the estimated time of delivery based upon the first location along the delivery route, such as the location at which the delivery vehicle is parked in preparation for making the delivery attempt or the delivery to the respective delivery location.

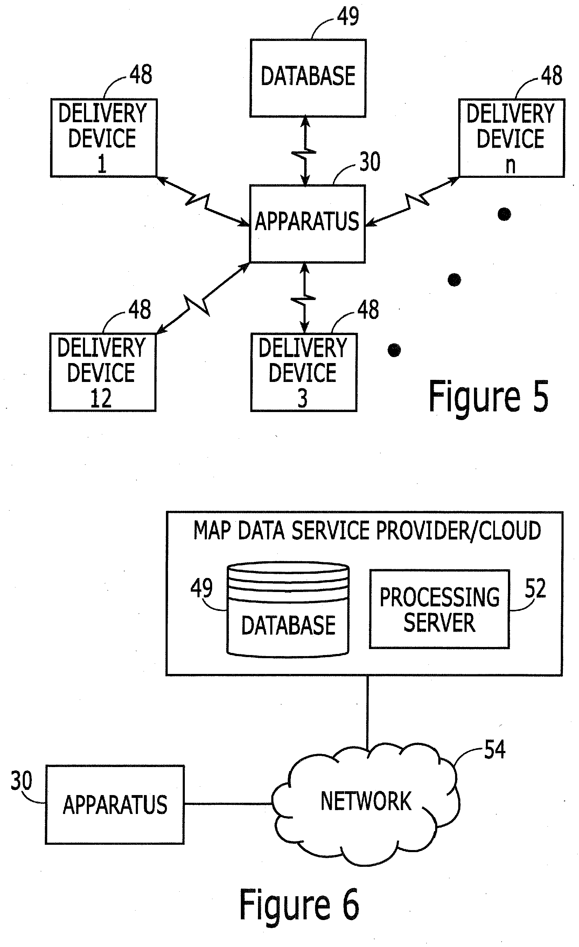

The apparatus 30, such as the processing circuitry 32, may be configured to determine the estimated time of delivery in various manners. For example, the apparatus, such as the processing circuitry, of an example embodiment is configured to determine the estimated time of delivery by reference to a database 49 with which the apparatus is in communication as shown in Figure 5. By way of example, but not of limitation, the database may be a map database, such as provided by map data service provider as shown in Figure 6. The map data service provider of one embodiment may be embodied by a cloud computing device and may include a processing server 52 configured to communicate both with the database and the apparatus 30, such as via the communication interface 36. As depicted by the embodiment of Figure 6, the apparatus and the map data service provider may be in communication via a network 54, which may be any form of wireless or partially wireless network. Additional, different, or fewer components may be provided. For example, the map data service provider may provide cloud-based services and/or may operate via a hosting server that receives, processes, and provides data to other elements of the system.

The map data service provider may include a database 49, such as a map database, that may include node data, road segment data or link data, point of interest (POI) data, traffic data or the like. The map database may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database can include data about the POIs and their respective locations in the POI records. The map database may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database can include event data (e.g., traffic incidents, construction activities, scheduled events, unscheduled events, etc.) associated with the POI data records or other records of the map database.

The database 49, such as the map database, may be maintained by a content provider e.g., the map data service provider, and may be accessed, for example, by the content or service provider processing server 52. By way of example, the map data service provider can collect geographic data and dynamic data to generate and enhance the map database and dynamic data such as traffic-related data contained therein. There can be different ways used by the map developer to collect data. These ways can include obtaining data from other sources, such as municipalities or respective geographic authorities, such as via global information system databases. In addition, the map developer can employ field personnel to travel by vehicle along roads throughout the geographic region to observe features and/or record information about them, for example. Also, remote sensing, such as aerial or satellite photography and/or LiDAR, can be used to generate map geometries directly or through machine learning as described herein. However, the most ubiquitous form of data that may be available is vehicle data provided by vehicles as they travel the roads throughout a region.

The database 49, such as the map database, may be a master map database, such as an HD map database, stored in a format that facilitates updates, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF)) to organize and/or configure the data for performing navigation-related functions and/or services, such as route calculation, route guidance, map display, speed calculation, distance and travel time functions, and other functions, by a navigation device. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the map data service provider database 49, such as the map database, may be a master geographic database, but in alternate embodiments, a client side map database may represent a compiled navigation database that may be used in or with end user devices to provide navigation and/or map-related functions. For example, the map database may be used to provide an end user with navigation features. In such a case, the map database can be downloaded or stored on the end user device which can access the map database through a wireless or wired connection, such as via a processing server 52 and/or the network 54, for example.

In accordance with an example embodiment, the database also includes an estimated time of arrival (ETA) database as described below, or other information that defines the length of time required for a person to travel from the first location or another location proximate the first location to the respective delivery location or another location proximate the respective delivery location. Locations that are proximate the first location or the delivery location may be defined in various manners including, for example, locations that are within a first predefined distance of the first location and locations that are within a second predefined distance of the delivery location.

In this example embodiment, information may be collected from one or more prior deliveries or delivery attempts to the various delivery locations within a building or a building complex with the information identifying the location at which the delivery vehicle was parked in preparation for making the delivery or the delivery attempt, the delivery location to which the delivery or the delivery attempt was made and the length of time for the delivery person to travel from the location at which the delivery vehicle was parked to the delivery location. Based upon the information that has been collected, the apparatus 30, such as the processing circuitry 32, of this example embodiment may be configured to determine a length of time, such as an average length of time, for a delivery person to travel from the first location, such as the location at which the delivery person parks the delivery vehicle, or a location proximate first location to the respective delivery location or another location proximate to the respective delivery location. Based upon the length of time that is determined, the apparatus, such as the processing circuitry, of this example embodiment is configured to determine the estimated time of delivery by adding the length of time required for the delivery person to walk to the respective delivery location to the time at which the delivery person parks the delivery vehicle or, if available, the time at which the delivery person exits the delivery vehicle.

The location at which a delivery vehicle is parked may be defined in various manners. For example, the location of a delivery vehicle including the location at which the delivery vehicle is parked in preparation for a delivery attempt or a delivery may be provided by a location sensor, such as a global positioning system (GPS) sensor, on board the delivery vehicle. For example, the location sensor included within or associated with a navigation system, mapping system or other computing system on board the delivery vehicle. Alternatively, the location at which the delivery vehicle is parked in preparation for a delivery attempt or a delivery may be determined based upon a location sensor, such as a GPS sensor, included with and or otherwise associated with a delivery device 48 carried by the delivery person. The delivery device may be embodied by any of a variety of different mobile computing devices configured to provided functionality to support the delivery efforts. For example, the delivery device may be embodied by a mobile telephone, a tablet computer or other type of delivery terminal that is configured to provide delivery information to the delivery person and to collect the information associated with a delivery or a delivery attempt.

Although the apparatus 30 of one example embodiment may be embodied by the delivery device 48 or by a computing system on board the delivery vehicle and, as a result, receive the information regarding the location at which the delivery vehicle is parked directly from the location sensor, the apparatus of other example embodiments is remote from the location sensor and, as a result, includes means, such as the processing circuitry 32, the communication interface 36 or the like, for receiving information regarding the location of the delivery vehicle, such as from the delivery device or by a computing system on board the delivery vehicle. By way of example, the apparatus of one example embodiment is depicted in Figure 5 to communicate, such as via the communication interface, with one or more delivery devices, such as delivery device 1, delivery device 2, delivery device 3,...delivery device n, each of which is carried by a different delivery person. As such, the apparatus, such as the processing circuitry, the communication interface or the like, is configured to receive information from a respective delivery device as to the location at which the delivery vehicle is parked in preparation for a delivery attempt or a delivery. In other embodiments, the apparatus may similarly communicate with one or more computing devices on board the delivery vehicles in order to determine the location at which the delivery vehicle is parked in preparation for a delivery attempt or a delivery. In some embodiments, the apparatus, such as the processing circuitry, the communication interface or the like, is also configured to receive information, such as from a respective delivery device or a computing device on board the delivery vehicle, as to the respective delivery location to be visited by the delivery person once the delivery vehicle is parked.

The determination of the location at which a delivery vehicle is parked in preparation for making a delivery or a delivery attempt may be triggered in various manners. For example, the location may be identified as that location at which the delivery vehicle is parked at the time at which the ignition of the vehicle is turned off during the process of making a delivery or a delivery attempt to the respective delivery location. Alternatively, the location at which a delivery vehicle is parked may be identified in response to a determination, such as by the delivery device 48 or by the apparatus 30, such as the processing circuitry 32, in response to information provided by the delivery device, that that the delivery person has exited the delivery vehicle, such as based upon a difference in location of the delivery device carried by the delivery person and the location of the delivery vehicle itself.

In one example embodiment, the apparatus 30, such as the processing circuitry 32, is configured to determine the estimated time of delivery based upon reference to an ETA database (generically depicted as database 49 in Figure 5) that provides information regarding an elapsed time to travel between locations associated with the first location and respective delivery location. In this regard, locations associated with the first location and the respective delivery location include the first location and respective delivery location and, in one embodiment, also includes locations proximate the first location, such as within a first predefined distance of the first location, and locations proximate the respective delivery location, such as within a second predefined distance of the respective delivery location. The information regarding the elapsed time, such as crowd sourced and, as such, may be based upon information collected during prior deliveries or delivery attempts, may be stored by the ETA database and the apparatus, such as the processing circuitry, may be configured to be in communication with the ETA database, such as via the communication interface 36, to obtain the elapsed time based upon information regarding the first location and the respective delivery location that are provided by the apparatus.

In another example embodiment, the apparatus 30, such as the processing circuitry 32, is configured to determine the estimated time of delivery based upon reference to a reverse geocoding database (also generically depicted as database 49 in Figure 5). A reverse geocoding database may be based upon crowd sourced data and associates an address of a location with the coordinates, e.g., latitude, longitude and altitude, of the location, such as in the form of a coordinate-address pair. In this regard, the altitude may be an absolute altitude (distance above or below sea level), a relative altitude (distance above or below the local ground level) or an altitude measured in terms of floors or stories of a building. In this example embodiment, the reverse geocoding database provides information regarding the latitude, longitude and altitude of the first location or a location associated with the first location and information regarding the latitude, longitude and altitude of the respective delivery location or a location associated with the respective delivery location. In this regard, locations associated with the first location and the respective delivery location include the first location and respective delivery location and, in one embodiment, also includes locations proximate the first location, such as within a first predefined distance of the first location, and locations proximate the respective delivery location, such as within a second predefined distance of the respective delivery location. In one embodiment, the location associated with the first location is the location that the reverse geocoding database associates with the address of the building 14 that includes the respective delivery location and the location associated with the respective delivery location is the location that the reverse geocoding database associates with the address of the respective delivery location. Based upon the information provided by the reverse geocoding database, the apparatus, such as the processing circuitry, of this example embodiment is configured to determine the elapsed time that is anticipated to be required for a delivery person to travel from the first location to the respective delivery location, such as based upon a predefined rate of travel of a delivery person or based upon a historical average speed of travel for the respective delivery person.

In some embodiments, the apparatus 30, such as the processing circuitry 32, is configured to not only determine the estimated time of delivery, but to also determine or be provided with a route along which the delivery person is instructed to travel from the first location to the respective delivery location. By way of example, an ETA database may include information regarding a route, such as most efficient route, from the first location to a respective delivery location, and may be configured to provide this information, such as via the communication interface 36, to the apparatus. Among other things, this information may provide information regarding the preferred area in which to park the delivery vehicle and the route including stairwells, elevators, escalators, hallways, walkways or other pedestrian paths to be taken by the delivery person in order to efficiently travel from the first location to the respective delivery location. While this information regarding the route to be taken from the first location to respective delivery location may be provided by an ETA or other database 49, the information regarding the route may also be determined by the apparatus, such as the processing circuitry, of other example embodiments, such as based upon information collected by the delivery person or other delivery people during prior deliveries to one or more delivery locations in the same building or building complex.

By providing the delivery person with information regarding the route to be taken from the first location to the respective delivery location, the efficiency with which deliveries or delivery attempts are made may be increased, the predictability of the delivery schedules may be enhanced and delivery costs associated with driving around a building in an effort to identify the best location to park the delivery vehicle may be reduced. While the information regarding the route to be taken from the first location to the respective delivery location may be useful in conjunction with any of a wide variety of delivery locations, the information regarding the route to be taken may be particularly useful in conjunction with deliveries or delivery attempts made to buildings or building complexes, such as building 14 in Figure 2, having a plurality of potential delivery locations 16 and a corresponding plurality of different routes that a delivery person can take to reach the respective delivery location.

The delivery person then delivers the item or makes a delivery attempt of the item at the respective delivery location. In conjunction with the delivery or the delivery attempt, the apparatus 30 includes means, such as the processing circuitry 32 or the like, for determining the delivery time at which the delivery attempt or the delivery was indicated to be made to the respective delivery location. See block 42 of Figure 4. The indication of the delivery attempt or the delivery may be provided in various manners. For example, the delivery person may provide an input via the delivery device 48 carried by the delivery person indicating that the delivery or the delivery attempt is being or has been made. Alternatively, the indication that the delivery attempt or the delivery has been made may be based upon an analysis of the location of the delivery device carried by the delivery person. In this regard, the indication that the delivery attempt or the delivery has been made to the respective delivery location may be provided may be identified by the apparatus, such as the processing circuitry, as that point in time at which the location of the delivery device carried by the delivery person begins to move away from the respective delivery location after having reached or come close to the delivery location, such as in an instance in which a delivery person walks to the door of the respective delivery location, makes the delivery or delivery attempt and then begins to retrace their steps to the delivery vehicle. At least in those situations in which the delivery time is defined based upon information provided by the delivery person, the delivery time may be a declared delivery time or a claimed delivery time since it is possible that the delivery person may mistakenly or falsely indicate that a delivery or a delivery attempt occurred at a delivery time when, in fact, the delivery or delivery attempt did not actually occur, at least not at the delivery time that is indicated.

As shown in block 44 of Figure 4, the apparatus 30 additionally includes means, such as the processing circuitry 32 or the like, for performing a comparison of the delivery time to the estimated time of delivery. In an example embodiment, the apparatus, such as the processing circuitry, is configured to compare the delivery time not just to the estimated time of delivery, but to a predefined window of time about the estimated time of delivery.

In accordance with an example embodiment, the apparatus 30 further includes means, such as the processing circuitry 32 or the like, for differently verifying the delivery attempt or the delivery to the respective delivery location depending upon the comparison of the delivery time to the estimated time of delivery. See block 46 of Figure 4. As described below, in an example embodiment, the delivery attempt or the delivery may be verified in an instance in which the delivery time equals or approximates the estimated time of delivery without requiring any further proof of the delivery attempt or the delivery, thereby enhancing the efficiency with which delivery verification is provided in these instances. However, in instances in which the delivery time does not equal or approximate the estimated time of delivery, the delivery attempt or the delivery may be identified to be unverifiable or additional evidence of the delivery attempt or the delivery may be requested, such as from the delivery person. By verifying the delivery attempt or the delivery in an automated fashion in at least some instances, the efficiency of the overall delivery verification process may be enhanced.

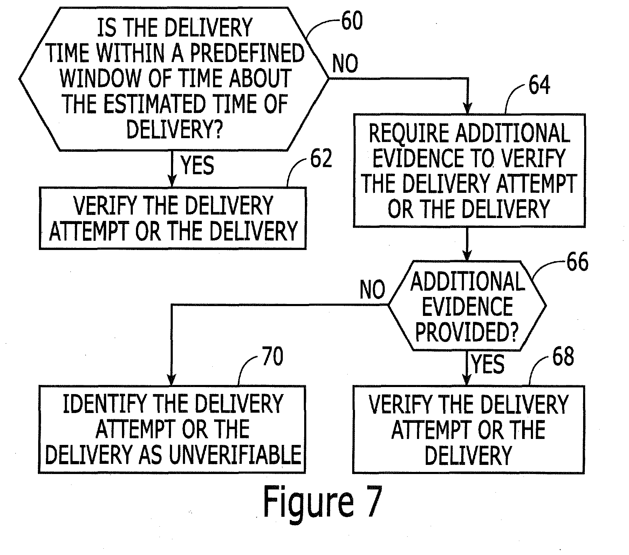

In an example embodiment depicted in Figure 7 and after having determined whether the delivery time is within a predefined window of time about the estimate time of delivery as shown in decision block 60, the apparatus 30, such as the processing circuitry 32, is configured to differently verify the delivery attempt or the delivery by verifying the delivery attempt or the delivery to the respective delivery location in an instance in which the delivery time is within a predefined window of time about the estimated time of delivery. See block 62. If the delivery time is within the predefined window of time about the estimated time of delivery, the delivery attempt or the delivery may be automatically verified based solely upon the delivery time and its relationship to the estimated time of delivery without requiring any additional evidence, such as photographic evidence, a signature of the recipient of the item that was delivered or otherwise, of the delivery attempt or the delivery. As such, the delivery attempt or the delivery may be more efficiently verified in these instances without requiring any further action or input by the delivery person which might otherwise slow the delivery services provided by the delivery person.

In instances in which the delivery time is outside of the predefined window of time about the estimated time of delivery, however, the apparatus 30 of this example embodiment includes means, such as the processing circuitry 32, the communication interface 36 or the like, for requiring additional evidence beyond the delivery time to verify the delivery attempt or the delivery to the respective delivery location. See block 64. A variety of different types of additional evidence may be required including, for example, a signature by the recipient of an item that was delivered or photographic evidence of the delivery location, such as the door to which the item was to be delivered, to substantiate a delivery attempt or a photograph of the door and the item that was delivered sitting in front of the door in order to substantiate an actual delivery. In this regard, the apparatus, such as the processing circuitry, the communication interface or the like, is configured in an example embodiment to cause a prompt to be provided requesting that a photograph of at least a portion of the respective delivery location be captured or that a signature by the recipient of the item that was delivered be obtained. This prompt may be transmitted to the delivery device 48 carried by the delivery person in real time or near real time, such as while the delivery person remains at the respective delivery location such that the delivery person may take the photograph or obtain the signature to provide the additional evidence of the delivery attempt or the delivery.

In this example embodiment, the apparatus 30 includes means, such as the processing circuitry 32 or the like, for determining whether the additional evidence was provided and, if so, for verifying the delivery attempt or the delivery. See blocks 66 and 68 of Figure 7. The verification of the delivery attempt based upon the additional evidence may include the evaluation of the additional evidence to ensure that the additional evidence does, in fact, prove that the delivery attempt or the delivery occurred. This verification of the additional evidence including the evaluation of the additional evidence may be automatically performed, such as by the apparatus 30, such as the processing circuitry 32, or manually by providing the additional evidence to a person who reviews the additional evidence to determine the sufficiency of the proof. In either example embodiment, the additional evidence may be stored, such as in memory 34 or a database 49 with which the apparatus is in communication and/or provided to the recipient as evidence of the delivery attempt or the delivery.

In an instance in which the additional evidence is not provided, however, the apparatus 30 of this example embodiment may include means, such as the processing circuitry 32 or the like, for identifying the delivery attempt or the delivery as unverifiable. See block 70. In an instance in which a delivery attempt or a delivery is identified to be unverifiable, various actions may be taken. For example, a representative of the delivery company may be alerted and, in an instance in which a delivery person is compensated based upon a number of delivery attempts that have been completed, the compensation for the delivery person may be adjusted, such as by being reduced, to account for any delivery attempts that are unverifiable such that the delivery person is not compensated for such unverifiable delivery attempts.

In the illustrated embodiment that is described above, in an instance in which the delivery time is outside of the predefined window of time about the estimated time of delivery, the delivery person is provided with an opportunity to provide additional evidence in order to allow the delivery attempt or the delivery to be verified. However, in other embodiments, in an instance in which the time of delivery is outside of the predefined window of time about the estimated time of delivery, the apparatus 30, such as the processing circuitry 32, is configured to identify the delivery attempt or the delivery as unverifiable without providing the delivery person with an opportunity to provide additional evidence to substantiate the delivery attempt or the delivery.

The method, apparatus 30 and computer program product of an example embodiment therefore improve the efficiency with which delivery attempts or deliveries are made while collecting information that permits the delivery attempts or deliveries to be verified or to be identified as unverifiable. In this regard, by basing the verification of a delivery attempt or delivery upon a comparison of a delivery time to an estimated time of delivery, a plurality of the delivery attempts or deliveries may be verified in an automated manner without requiring additional evidence, thereby increasing the efficiency of the delivery process while still providing appropriate verification of the delivery attempts and the deliveries. Since the collection of additional evidence of a delivery attempt or delivery may require additional time and resources, the method, apparatus and computer program product of an example embodiment limit the instances in which this additional evidence is to be collected, such as to those instances in which the delivery time fails to correspond to the estimated time of delivery, thereby correspondingly limiting the additional memory and network resources required to store and transmit the additional evidence while still providing for appropriate verification of delivery attempts or deliveries (including the possible identification of a delivery attempt as unverifiable) in situations in which the delivery time does not coincide with the estimated time of delivery.

Figures 4 and 7 illustrate flowcharts depicting a method according to an example embodiment of the present invention. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by the memory 34 of an apparatus 30 employing an embodiment of the present invention and executed by the processing circuitry 32. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Furthermore, in some embodiments, additional optional operations may be included. Modifications, additions, or amplifications to the operations above may be performed in any order and in any combination.

Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus configured to provide delivery verification, the apparatus comprising at least one processor and at least one memory storing computer program code, the at least one memory and the computer program code configured to, with the processor, cause the apparatus to at least:
determine an estimated time of delivery to a respective delivery location, wherein the estimated time of delivery is at least partially based upon a first location along a delivery route and the respective delivery location;
determine a delivery time at which a delivery attempt or a delivery was indicated to be made to the respective delivery location;
perform a comparison of the delivery time to the estimated time of delivery; and
differently verify the delivery attempt or the delivery to the respective delivery location depending upon the comparison of the delivery time to the estimated time of delivery.

2. The apparatus according to Claim 1, wherein the at least one memory and the computer program code are configured to, with the processor, cause the apparatus to differently verify the delivery attempt or the delivery by verifying the delivery attempt or the delivery to the respective delivery location in an instance in which the delivery time is within a predefined window of time about the estimated time of delivery.

3. The apparatus according to Claim 1, wherein the at least one memory and the computer program code are configured to, with the processor, cause the apparatus to differently verify the delivery attempt or the delivery by requiring additional evidence beyond the delivery time to verify the delivery attempt or the delivery to the respective delivery location in an instance in which the delivery time is outside of the predefined window of time about the estimated time of delivery, wherein, in particular, the at least one memory and the computer program code are configured to, with the processor, cause the apparatus to require additional evidence by causing a prompt to be provided requesting that a photograph of at least a portion of the respective delivery location be captured.

4. The apparatus according to Claim 1, wherein the at least one memory and the computer program code are configured to, with the processor, cause the apparatus to differently verify the delivery attempt or the delivery by identifying the delivery attempt or the delivery to the respective delivery location to be unverifiable in an instance in which the delivery time is outside of the predefined window of time about the estimated time of delivery.

5. The apparatus according to any of Claims 1 to 4, wherein the first location along the delivery route comprises a location at which a delivery vehicle is parked in preparation for making the delivery attempt or the delivery to the respective delivery location, and wherein the at least one memory and the computer program code are configured to, with the processor, cause the apparatus to determine the estimated time of delivery by determining the estimated time of delivery at least partially based upon the location at which the delivery vehicle is parked and the respective delivery location.

6. The apparatus according to any of Claims 1 to 5, wherein the at least one memory and the computer program code are configured to, with the processor, cause the apparatus to determine the estimated time of delivery by determining the estimated time of delivery based upon reference to an estimated time of arrival (ETA) database that provides information regarding an elapsed time to travel between locations associated with the first location and the respective delivery location.

7. The apparatus according to any of Claims 1 to 6, wherein the at least one memory and the computer program code are configured to, with the processor, cause the apparatus to determine the estimated time of delivery by determining the estimated time of delivery based upon reference to a reverse geocoding database that provides information regarding a latitude, longitude and altitude of a location associated with the first location and the respective delivery location.

8. A method for delivery verification, the method comprising:
determining an estimated time of delivery to a respective delivery location, wherein the estimated time of delivery is at least partially based upon a first location along a delivery route and the respective delivery location;
determining a delivery time at which a delivery attempt or a delivery was indicated to be made to the respective delivery location;
performing a comparison of the delivery time to the estimated time of delivery; and
differently verifying the delivery attempt or the delivery to the respective delivery location depending upon the comparison of the delivery time to the estimated time of delivery.

9. The method according to Claim 8, wherein differently verifying the delivery attempt or the delivery comprises verifying the delivery attempt or the delivery to the respective delivery location in an instance in which the delivery time is within a predefined window of time about the estimated time of delivery.

10. The method according to Claim 8, wherein differently verifying the delivery attempt or the delivery comprises requiring additional evidence beyond the delivery time to verify the delivery attempt or the delivery to the respective delivery location in an instance in which the delivery time is outside of the predefined window of time about the estimated time of delivery, wherein, in particular, requiring additional evidence comprises causing a prompt to be provided requesting that a photograph of at least a portion of the respective delivery location be captured.

11. The method according to Claim 8, wherein differently verifying the delivery attempt or the delivery comprises identifying the delivery attempt or the delivery to the respective delivery location to be unverifiable in an instance in which the delivery time is outside of the predefined window of time about the estimated time of delivery.

12. The method according to any of Claims 8 to 11, wherein the first location along the delivery route comprises a location at which a delivery vehicle is parked in preparation for making the delivery attempt or the delivery to the respective delivery location, and wherein determining the estimated time of delivery comprises determining the estimated time of delivery at least partially based upon the location at which the delivery vehicle is parked and the respective delivery location.

13. The method according to any of Claims 8 to 12, wherein determining the estimated time of delivery comprises determining the estimated time of delivery based upon reference to an estimated time of arrival (ETA) database that provides information regarding an elapsed time to travel between locations associated with the first location and the respective delivery location.

14. The method according to any of Claims 8 to 13, wherein determining the estimated time of delivery comprises determining the estimated time of delivery based upon reference to a reverse geocoding database that provides information regarding a latitude, longitude and altitude of a location associated with the first location and the respective delivery location.

15. A computer program comprising program code instructions which, when executed by a processor of an apparatus, cause the apparatus to perform a method according to any of claims 8 to 14.
